# EUROPEAN PATENT APPLICATION

(11) **EP 4 675 239 A2**
(43) Date of publication of application: **07.01.2026**
(21) Application number: 25204976.2
(22) Date of filing: 21.02.2023
(51) Int. Cl.: G01F 1/84

(54) **ELECTROMAGNETIC TRANSDUCER FOR SYMMETRIC OSCILLATIONS OF A SYMMETRICALLY OSCILLATORY DEVICE**

(62) Divisional of application: 23713179.2
(71) Applicant: Micro Motion, Inc., Boulder, CO 80301 (US)
(72) Inventor: CONLEY, Gretchen Marie, Boulder, 80301 (US); SCHMIDT, Marcus J., Aurora, 80015 (US)
(74) Representative: Ellis, Christopher Paul

(57) **Abstract**

An electromagnetic transducer (17) for symmetric oscillations of a symmetrically oscillatory device (1) is provided. The electromagnetic transducer (17) comprises a first electromagnetic transducer portion having a first electromagnetic transducer portion center of mass (CM₁₇ₐ) and a second electromagnetic transducer portion having a second electromagnetic transducer portion center of mass (CM_{17b}). The first electromagnetic transducer portion and the second electromagnetic transducer portion are symmetrically balanced.

## Description

### TECHNICAL FIELD

The embodiments described below relate to electromagnetic transducers and, more particularly, to electromagnetic transducers for symmetric oscillations of a symmetrically oscillatory device.

### BACKGROUND

Devices sometimes employ symmetric oscillations or more particularly symmetrically opposing oscillations to perform measurement, provide balanced vibrations, perform percussive work, and/or the like. Such symmetric oscillations may require that two portions of a symmetric oscillation device move towards and away from each other in an opposing manner. This may be referred to as an out of phase vibration or oscillation or with more specificity vibrations that are 180 degrees out of phase. By way of illustration, vibratory meters may be viewed as a symmetric oscillation device.

Vibratory meters, such as for example, Coriolis mass flowmeters, liquid density meters, gas density meters, liquid viscosity meters, gas/liquid specific gravity meters, gas/liquid relative density meters, and gas molecular weight meters, are generally known and are used for measuring fluid parameters. Generally, vibratory meters comprise a sensor assembly and a meter electronics. The material within the sensor assembly may be flowing or stationary. The vibratory meter may be used to measure the one or more fluid parameters such as mass flow rate, density, or other properties of a material in the sensor assembly.

The sensor assembly may rely on ideal or assumed symmetric oscillations of two vibratory members, such as conduits, tines, or the like, to accurately measure the fluid parameters. An electromagnetic transducer may be affixed to the two vibratory members to measure the parameters of the material sensed by the sensor assembly. The electromagnetic transducer may be a displacement sensor, a driver, or the like. However, the electromagnetic transducer may not be symmetrically balanced. As a result, the oscillations of the two vibratory members may not be symmetric. Therefore, there is a need for an electromagnetic transducer for symmetric oscillations of a symmetrically oscillatory device.

### SUMMARY

An electromagnetic transducer for symmetric oscillations of a symmetrically oscillatory device is provided. According to an embodiment, the electromagnetic transducer for symmetric oscillations of the symmetrically oscillatory device comprises a first electromagnetic transducer portion having a first electromagnetic transducer portion center of mass and a second electromagnetic transducer portion having a second electromagnetic transducer portion center of mass. The first electromagnetic transducer portion and the second electromagnetic transducer portion are symmetrically balanced.

A symmetrically oscillatory device configured for symmetric oscillations is provided. According to an embodiment, the symmetrically oscillatory device comprises a first oscillatory portion and a second oscillatory portion configured to symmetrically oscillate relative to each other and an electromagnetic transducer according to one of the foregoing, the electromagnetic transducer being mechanically coupled to the first oscillatory portion and the second oscillatory portion.

A method of forming an electromagnetic transducer for symmetric oscillations of a symmetrically oscillatory device is provided. According to an embodiment, the method comprises providing a first electromagnetic transducer portion having a first electromagnetic transducer portion center of mass, providing a second electromagnetic transducer portion having a second electromagnetic transducer portion center of mass, and symmetrically balancing the first electromagnetic transducer portion and the second electromagnetic transducer portion.

A method of forming an electromagnetic transducer for symmetric oscillations of a symmetrically oscillatory device is provided. According to an embodiment, the method comprises forming a magnet assembly, forming a coil assembly comprising providing an insert and providing a bobbin, selecting an adhesive to minimize an elastic deformation of the adhesive over a predetermined operating temperature range of the coil assembly, and affixing, with the adhesive, the insert to the bobbin.

An electromagnetic transducer for transducing symmetric oscillations is provided. According to an embodiment, the electromagnetic transducer comprises the electromagnetic transducer being formed according to one of the foregoing.

A symmetrically oscillatory device configured for symmetric oscillations is provided. According to an embodiment, the symmetrically oscillatory device comprises a first oscillatory portion and a second oscillatory portion configured to symmetrically oscillate relative to each other and an electromagnetic transducer according to the above, the electromagnetic transducer being mechanically coupled to the first oscillatory portion and the second oscillatory portion.

### ASPECTS

According to an aspect, an electromagnetic transducer for symmetric oscillations of a symmetrically oscillatory device comprises a first electromagnetic transducer portion having a first electromagnetic transducer portion center of mass and a second electromagnetic transducer portion having a second electromagnetic transducer portion center of mass. The first electromagnetic transducer portion and the second electromagnetic transducer portion are symmetrically balanced.

Preferably, the first electromagnetic transducer portion is configured to mechanically couple to a first oscillatory portion of the symmetrically oscillatory device and the second electromagnetic transducer portion is configured to mechanically couple to a second oscillatory portion of the symmetrically oscillatory device.

Preferably, the first electromagnetic transducer portion and the second electromagnetic transducer portion being symmetrically balanced comprises the first electromagnetic transducer portion center of mass and the second electromagnetic transducer portion center of mass being equidistant from a device center plane of the symmetrically oscillatory device and on a transducer center of mass line.

Preferably, the center plane of the symmetrically oscillatory device is defined by and positioned at points equidistant between the first oscillatory portion and the second oscillatory portion.

Preferably, the transducer center of mass line is orthogonal to the device center plane of the symmetrically oscillatory device.

Preferably, the first electromagnetic transducer portion and the second electromagnetic transducer portion have a same moment of inertia value.

Preferably, the symmetrically oscillatory device is a vibratory meter configured to measure properties of a material.

Preferably, the first oscillatory portion and the second oscillatory portion are conduits of the vibratory meter.

Preferably, the first electromagnetic transducer portion comprises a magnet assembly and the second electromagnetic transducer portion comprises a coil assembly.

Preferably, the magnet assembly comprises a magnet and a magnet keeper affixed to the magnet and the coil assembly comprises a bobbin and an insert affixed to the bobbin.

Preferably, the insert is selected to symmetrically balance the magnet assembly and the coil assembly.

According to an aspect, a symmetrically oscillatory device configured for symmetric oscillations comprises a first oscillatory portion and a second oscillatory portion configured to symmetrically oscillate relative to each other and an electromagnetic transducer according to one of the foregoing, the electromagnetic transducer being mechanically coupled to the first oscillatory portion and the second oscillatory portion.

According to an aspect, a method of forming an electromagnetic transducer for symmetric oscillations of a symmetrically oscillatory device comprises providing a first electromagnetic transducer portion having a first electromagnetic transducer portion center of mass, providing a second electromagnetic transducer portion having a second electromagnetic transducer portion center of mass, and symmetrically balancing the first electromagnetic transducer portion and the second electromagnetic transducer portion.

Preferably, providing the first electromagnetic transducer portion comprises configuring the first electromagnetic transducer portion to mechanically couple to a first oscillatory portion of the symmetrically oscillatory device and providing the second electromagnetic transducer portion comprises configuring the first electromagnetic transducer portion to mechanically couple to a second oscillatory portion of the symmetrically oscillatory device.

Preferably, symmetrically balancing the first electromagnetic transducer portion and the second electromagnetic transducer portion comprises positioning the first electromagnetic transducer portion center of mass and the second electromagnetic transducer portion center of mass to be equidistant from a device center plane of the symmetrically oscillatory device and on a transducer center of mass line.

Preferably, the method further comprises defining and positioning the center plane of the symmetrically oscillatory device at points equidistant between the oscillatory portion and the second oscillatory portion.

Preferably, the method further comprises orienting the transducer center of mass line to be orthogonal to the device center plane of the symmetrically oscillatory device.

Preferably, the method further comprises configuring the first electromagnetic transducer portion and the second electromagnetic transducer portion to have a same moment of inertia value.

Preferably, the symmetrically oscillatory device is a vibratory meter configured to measure properties of a material.

Preferably, the first oscillatory portion and the second oscillatory portion are conduits of the vibratory meter.

Preferably, providing the first electromagnetic transducer portion comprises providing a magnet assembly and providing the second electromagnetic transducer portion comprises providing a coil assembly.

Preferably, providing the magnet assembly comprises providing a magnet and a magnet keeper affixed to the magnet and providing the coil assembly comprises providing a bobbin and an insert affixed to the bobbin.

Preferably, the insert is selected to symmetrically balance the magnet assembly and the coil assembly.

According to an aspect, a method of forming an electromagnetic transducer for symmetric oscillations of a symmetrically oscillatory device comprises forming a magnet assembly, forming a coil assembly comprising providing an insert and providing a bobbin, selecting an adhesive to minimize an elastic deformation of the adhesive over a predetermined operating temperature range of the coil assembly, and affixing, with the adhesive, the insert to the bobbin.

Preferably, the method further comprises forming a non-interfering interface between the magnet assembly and the coil assembly.

Preferably, selecting the adhesive to minimize the elastic deformation of the adhesive over the predetermined operating temperature of the coil assembly comprises selecting the adhesive to elastically deform over the predetermined operating temperature range of the coil assembly and plastically deform over an alternative predetermined operating temperature range that is greater than the predetermined operating temperature range of the coil assembly.

Preferably, the method further comprises verifying that one or more sensor parameters remain within a predetermined sensor parameter range over the predetermined operating temperature range.

Preferably, the one or more sensor parameters comprise at least one of a physical property of the sensor and a transduction property of the sensor.

Preferably, selecting the adhesive to minimize elastic deformation of the adhesive over the predetermined operating temperature range of the coil assembly comprises selecting a quantity of the adhesive to minimize a gap between the bobbin and the insert.

Preferably, selecting the adhesive to minimize elastic deformation of the adhesive over the predetermined operating temperature range of the coil assembly comprises minimizing a difference between a coefficient of thermal expansion of the insert and a coefficient of thermal expansion of the adhesive.

Preferably, wherein affixing, with the adhesive, the insert to the bobbin comprises applying the adhesive to at least one of the insert and the bobbin and pressing the insert and the bobbin together in a predetermined spaced relationship.

Preferably, the adhesive comprises one of an epoxy resin and a silicon-based adhesive.

According to an aspect, an electromagnetic transducer for transducing symmetric oscillations comprises the electromagnetic transducer being formed according to one of the foregoing.

According to an aspect, a symmetrically oscillatory device configured for symmetric oscillations comprises a first oscillatory portion and a second oscillatory portion configured to symmetrically oscillate relative to each other and an electromagnetic transducer according to the above, the electromagnetic transducer being mechanically coupled to the first oscillatory portion and the second oscillatory portion.

### BRIEF DESCRIPTION OF THE DRAWINGS

The same reference number represents the same element on all drawings. It should be understood that the drawings are not necessarily to scale.
FIG. 1 shows a symmetrically oscillatory device 1.
FIG. 2 shows a vibratory meter 5 configured for symmetric oscillations.
FIG. 3 shows a conduit-sensor assembly 300 that includes an electromagnetic transducer assembly 370, which as shown is a pick-off sensor, coupled to the conduits 130, 130' described with reference to FIG. 2.
FIG. 4 shows a first alternative conduit-sensor assembly 400 that includes an electromagnetic transducer assembly 470 coupled to the conduits 130, 130' described with reference to FIG. 2.
FIGS. 5 and 6 show a second alternative conduit-sensor assembly 500 that includes an electromagnetic transducer assembly 570 coupled to the conduits 130, 130' described with reference to FIG. 2.
FIG. 7 shows electromagnetic transducer 770s that may be in a third alternative electromagnetic transducer configured to couple to the conduits 130, 130' (not shown in FIG. 7) described with reference to FIG. 2.
FIG. 8 shows electromagnetic transducer 870s that may be in a fourth alternative electromagnetic transducer configured to couple to the conduits 130, 130' described with reference to FIG. 2.
FIG. 9 shows a first method 900 of forming an electromagnetic transducer for symmetric oscillations.
FIG. 10 shows a second method 1000 of forming an electromagnetic transducer for symmetric oscillations.

### DETAILED DESCRIPTION

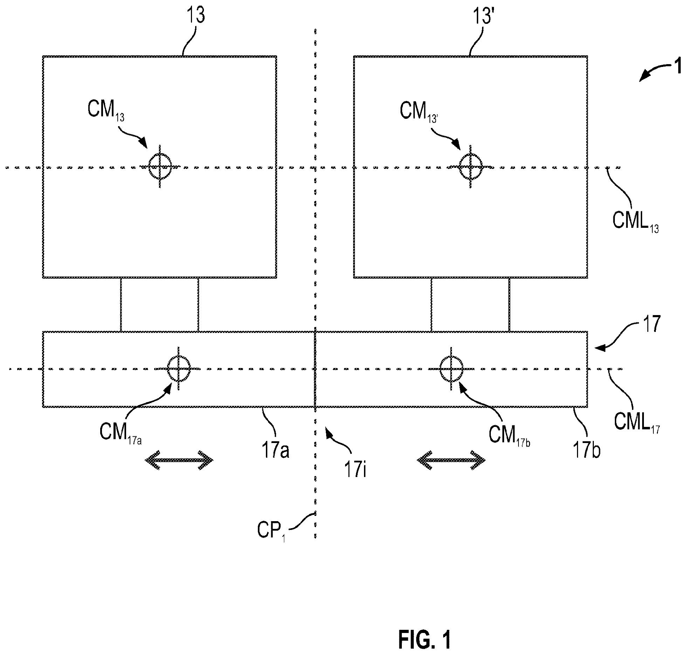

FIGS. 1 - 10 and the following description depict specific examples to teach those skilled in the art how to make and use the best mode of embodiments of an electromagnetic transducer for symmetric oscillations of a symmetrically oscillatory device. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the electromagnetic transducer for symmetric oscillations of the symmetrically oscillatory device. As a result, the embodiments described below are not limited to the specific examples described below, but only by the claims and their equivalents.

FIG. 1 shows a symmetrically oscillatory device 1. As shown in FIG. 1, the symmetrically oscillatory device 1 is comprised of a first oscillatory portion 13 and a second oscillatory portion 13' that are configured to oscillate relative to each other in an at least substantially linear manner. Such oscillations may be induced by an electromechanical force transducer, which is not shown in FIG. 1 for clarity, although any suitable means for inducing such oscillation may be employed. A first oscillatory portion center of mass CM₁₃ and a second oscillatory portion center of mass CM_{13'} are indicated by center of mass symbols. Also shown in FIG. 1 is an electromagnetic transducer 17. The electromagnetic transducer 17 is comprised of a magnet assembly 17a and a coil assembly 17b, which may be referred to as transducer components, that are respectively coupled to the first oscillatory portion 13 and the second oscillatory portion 13' via brackets. Although shown, the brackets are not referenced and are assumed to be massless in FIG. 1 for the sake of discussion. The magnet and coil assembly 17a,17b are shown as abutting at a sensor interface 17i. The magnet assembly 17a and the coil assembly 17b are shown with a first electromagnetic transducer portion center of mass CM₁₇ₐ and a second electromagnetic transducer portion center of mass CM_{17b}. The first electromagnetic transducer portion center of mass CM₁₇ₐ and the second electromagnetic transducer portion center of mass CM_{17b} are indicated by center of mass symbols. A device center plane CP₁ of the symmetrically oscillatory device 1, an oscillatory portions center of mass line CML₁₃ and a transducer center of mass line CML₁₇ are also shown.

The device center plane CP₁ is a plane that lies equidistant from and between the first oscillatory portion 13 and the second oscillatory portion 13'. That is, the first oscillatory portion 13 and the second oscillatory portion 13' are shown in FIG. 1 as two-dimensional end views of a three-dimensional object that extends into the sheet. The device center plane CP₁ is shown as extending between the magnet and coil assembly 17a, 17b along the sensor interface 17i. The sensor interface 17i represents a non-interfering interface. That is, the sensor interface 17i represents a nominal relative position of the magnet assembly 17a and the coil assembly 17b. Accordingly, the magnet assembly 17a and the coil assembly 17b may move toward and away from each other without physically interfering with each other. By way of illustration, the magnet assembly 17a may have, for example, cross section (section taken parallel to the device center plane CP₁) dimensions such as diameter, width, or the like, that is smaller than corresponding cross section dimensions of the coil assembly 17b.

The first oscillatory portion 13 and the second oscillatory portion 13' are symmetrically balanced. That is, the first and second oscillatory portions 13, 13' have the same shape, equal mass values, and the first oscillatory portion center of mass CM₁₃ and the second oscillatory portion center of mass CM_{13'} that are equidistant from the device center plane CP₁ on a same center of mass line CML₁₃ that is perpendicular to the device center plane CP₁. Because the first and second oscillatory portions 13, 13' have a same shape, the first and second oscillatory portions 13, 13' have the same moment of inertia. However, alternative oscillatory portions may not necessarily need to have a same shape and/or a same moment of inertia to be symmetrically balanced. Similarly, the magnet and coil assembly 17a, 17b are symmetrically balanced about the device center plane CP₁. Accordingly, the electromagnetic transducer 17 may be referred to as a symmetrically balanced electromagnetic transducer. Further, the symmetrically oscillatory device 1 may therefore be configured to symmetrically oscillate.

For example, the first oscillatory portion 13 and the second oscillatory portion 13' may be coupled to a rail, hinge, pivot point, or the like, that allows that first oscillatory portion 13 and the second oscillatory portion 13' to oscillate in substantially the direction of, and not orthogonal to, the arrows shown in FIG. 1. As can be appreciated, where the first oscillatory portion 13 and the second oscillatory portion 13' are coupled to a hinge or pivot point, a magnitude of a displacement of the first oscillatory portion 13 and the second oscillatory portion 13' may be small relative to a distance between the first oscillatory portion 13 and/or the second oscillatory portion 13' and the hinge, pivot point, or the like. Accordingly, the oscillations may be substantially linear and in the direction of the arrows shown in FIG. 1.

The oscillation of the first oscillatory portion 13 and the second oscillatory portion 13' may be substantially out of phase. For example, the first oscillatory portion 13 and the second oscillatory portion 13' may sinusoidally oscillate 180 degrees out of phase with each other. Additionally, or alternatively, non-sinusoidal oscillations may be employed, such as triangular, square, impulse, and/or the like. The symmetrical oscillation may be an out of phase oscillation. The symmetrical oscillations may move the first oscillatory portion center of mass CM₁₃ and the second oscillatory portion center of mass CM_{13'} at least substantially along the oscillatory portions center of mass line CML₁₃. Accordingly, the first oscillatory portion 13 and the second oscillatory portion 13' may spatiotemporally move towards and away from each other in a symmetrically balanced manner.

The symmetrically oscillatory device 1 may employ such symmetrical oscillations to perform some function, such as measurement, generating power, vibrating other objects, etc. Accordingly, the first oscillatory portion 13 and the second oscillatory portion 13' may be oscillation portions of a measurement device, power generator, vibratory actuator, percussive tool, or the like, although any suitable symmetrically oscillatory device may be employed. As shown in FIG. 1, the electromagnetic transducer 17 may measure the oscillation of the first oscillatory portion 13 and the second oscillatory portion 13'.

By way of illustration, the electromagnetic transducer 17 may be comprised of a magnet and coil that is disposed, for example, about the magnet. Accordingly, the magnet assembly 17a and the coil assembly 17b may respectively be a magnet assembly and a coil assembly. For example, the magnet assembly 17a may be comprised of a magnet affixed to a magnet keeper, which may also be referred to as a pole piece, and the coil assembly 17b may be comprised of a coil disposed about a coil bobbin, which in turn may be disposed about an insert. Similar to the first oscillatory portion 13 and the second oscillatory portion 13', the magnet assembly 17a and the coil assembly 17b are shown in FIG. 1 as being symmetrically balanced about the device center plane CP₁.

The symmetric balancing may ensure that the oscillations of the first and second oscillatory portions 13, 13' and the magnet and coil assembly 17a, 17b will not include asymmetric effects on measurements by the electromagnetic transducer 17. For example, if the magnet assembly 17a and the coil assembly 17b are not symmetrically balanced about the device center plane CP₁, then the oscillations of the first oscillatory portion 13 and the second oscillatory portion 13' may not be opposingly balanced even if an electromagnetic force transducer applies perfectly symmetric oscillating forces to the first oscillatory portion 13 and the second oscillatory portion 13'. This can cause an inaccurate measurement by the electromagnetic transducer 17.

As can be appreciated, the symmetric balancing of the symmetrically oscillatory device 1 can also be achieved where the electromagnetic transducer 17 is replaced by an electromechanical actuator that applies a force to the first and second oscillatory portions 13, 13'. That is, symmetrically balancing a first and second portion of force transducer that is mechanically coupled to the first and second oscillatory portions 13, 13' can result in opposingly balanced oscillations of the first and second oscillatory portions 13, 13'. Accordingly, the electromagnetic transducer 17 may be representative of an electromechanical actuator, which may be referred to as a force transducer, and/or a sensor, which may be referred to as a displacement transducer. In either case, the electromagnetic transducer 17 may be for a symmetric oscillation of the first and second oscillatory portions 13, 13'.

As explained above, the symmetrically oscillatory device 1 may be found in various exemplary devices. By way of illustration, the symmetrically oscillatory device 1 may be a vibratory meter that includes vibratory elements that oscillate in an opposing or out of phase manner to measure properties of a fluid. An exemplary vibratory meter is described in the following.

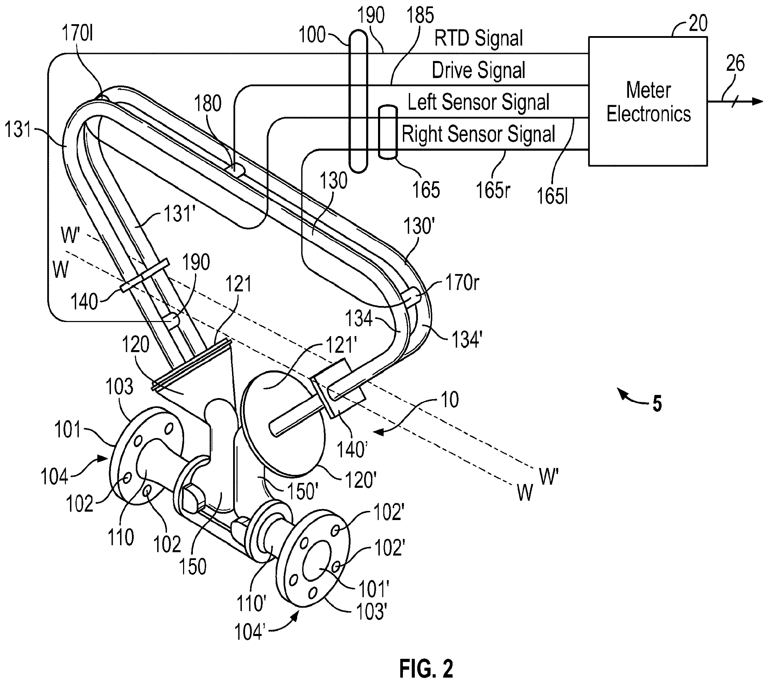

FIG. 2 shows a vibratory meter 5 configured for symmetric oscillations. As shown in FIG. 2, the vibratory meter 5 comprises a sensor assembly 10 and meter electronics 20. The sensor assembly 10 responds to mass flow rate and density of a process material. The meter electronics 20 is connected to the sensor assembly 10 via leads 100 to provide density, mass flow rate, and temperature information over port 26, as well as other information.

The sensor assembly 10 includes a pair of manifolds 150 and 150', flanges 103 and 103' having flange necks 110 and 110', a pair of parallel conduits 130 and 130' (comprising a first conduit 130 and a second conduit 130'), driver 180, resistive temperature detector (RTD) 190, and a pair of pick-off sensors 170l and 170r. The conduits 130 and 130' have two essentially straight inlet legs 131, 131' and outlet legs 134, 134', which converge towards each other at conduit mounting blocks 120 and 120'. The conduits 130, 130' bend at two symmetrical locations along their length and are essentially parallel throughout their length. Brace bars 140 and 140' serve to define the axis W and W' about which each conduit 130, 130' oscillates. The legs 131, 131' and 134, 134' of the conduits 130, 130' are fixedly attached to conduit mounting blocks 120 and 120' and these blocks, in turn, are fixedly attached to manifolds 150 and 150'. This provides a continuous closed material path through sensor assembly 10.

When flanges 103 and 103', having holes 102 and 102' are connected, via inlet end 104 and outlet end 104' into a process line (not shown) which carries the process material that is being measured, material enters inlet end 104 of the vibratory meter through an orifice 101 in the flange 103 and is conducted through the manifold 150 to the conduit mounting block 120 having a surface 121. Within the manifold 150 the material is divided and routed through the conduits 130, 130'. Upon exiting the conduits 130, 130', the process material is recombined in a single stream within the block 120' having a surface 121' and the manifold 150' and is thereafter routed to outlet end 104' connected by the flange 103' having holes 102' to the process line (not shown).

The conduits 130, 130' are selected and appropriately mounted to the conduit mounting blocks 120, 120' so as to have substantially the same mass distribution, moments of inertia and Young's modulus about bending axes W--W and W'--W', respectively. These bending axes go through the brace bars 140, 140'. Inasmuch as the Young's modulus of the conduits change with temperature, and this change affects the calculation of flow and density, RTD 190 is mounted to second conduit 130' to continuously measure the temperature of the second conduit 130'. The temperature of the conduit 130' and hence the voltage appearing across the RTD 190 for a given current passing therethrough is governed by the temperature of the material passing through the second conduit 130'. The temperature dependent voltage appearing across the RTD 190 is used in a well-known method by the meter electronics 20 to compensate for the change in elastic modulus of the conduits 130, 130' due to any changes in conduit temperature. The RTD 190 is connected to the meter electronics 20 by lead 195.

Both of the conduits 130, 130' are driven by driver 180 in opposite directions about their respective bending axes W and W' and at what is termed the first out-of-phase bending mode of the vibratory meter. This driver 180 may comprise any one of many well-known arrangements, such as a magnet mounted to the second conduit 130' and an opposing coil mounted to the first conduit 130 and through which an alternating current is passed for vibrating both conduits 130, 130'. A suitable drive signal 185 is applied by the meter electronics 20, via a lead, to the driver 180. Accordingly, the vibratory meter 5 or, more particularly, the sensor assembly 10, may be viewed as a symmetrically oscillatory device, such as the symmetrically oscillatory device 1 described above.

The meter electronics 20 receives the RTD temperature signal on lead 195, and sensor signals 165 appearing on leads 100 carrying left and right sensor signals 1651, 165r, respectively. The meter electronics 20 produces the drive signal 185 appearing on the lead to driver 180 and vibrate conduits 130, 130'. The meter electronics 20 processes the left and right sensor signals 1651, 165r and the lead 195 carrying the RTD signal to compute the mass flow rate and the density of the material passing through sensor assembly 10. This information, along with other information, is applied by meter electronics 20 over port 26 as a signal.

As explained above, the sensor assembly 10 includes the pair of pick-off sensors 170l and 170r, which are mechanically coupled to the conduits 130, 130'. The conduits 130, 130' and the pair of pick-off sensors 170l and 170r may respectively be examples of the first oscillatory portion 13 and second oscillatory portion 13', and the electromagnetic transducer 17 described above with reference to FIG. 1. Accordingly, the conduits 130, 130' as well as the pair of pick-off sensors 170l, 170r may be symmetrically balanced about the device center plane CP₁, as is described in more detail in the following.

### Symmetrically balanced electromagnetic transducer

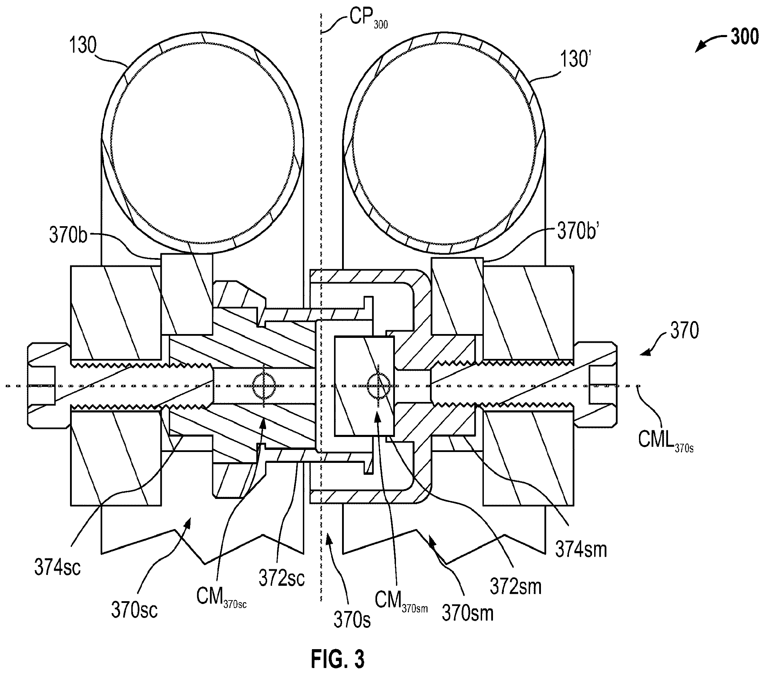

FIG. 3 shows a conduit-sensor assembly 300 that includes an electromagnetic transducer assembly 370, which as shown is a pick-off sensor, coupled to the conduits 130, 130' described with reference to FIG. 2. The conduits 130, 130' may be examples of the first and second oscillatory portions 13, 13' described with reference to FIG. 1. The electromagnetic transducer assembly 370 may be an example of the electromagnetic transducer 17 described with reference to FIG. 1 and the pick-off sensors 1701, 170r described with reference to FIG. 2. The electromagnetic transducer assembly 370 is mechanically coupled to the conduits 130, 130'. Also shown in FIG. 3 is a sensor assembly center-plane CP₃₀₀ that is equidistant between the conduits 130, 130'. The electromagnetic transducer assembly 370 is comprised of a first and second bracket 370b, 370b' and electromagnetic transducer 370s. A transducer center of mass line CML₃₇₀ₛ is also shown. The electromagnetic transducer 370s is mechanically coupled to the conduits 130, 130' with the first and second bracket 370b, 370b'. With more particularity, a coil assembly 370sc is mechanically coupled to the first bracket 370b which is mechanically coupled to the first conduit and a magnet assembly 370sm is mechanically coupled to the second bracket 370b' which is mechanically coupled to the second conduit 130'. A coil assembly center of mass CM_{370sc} and a magnet assembly center of mass CM₃₇₀ₛₘ are shown as lying on the transducer center of mass line CML₃₇₀ₛ.

As can be appreciated from FIG. 3, the conduits 130, 130' and the first and second bracket 370b, 370b' respectively have a same shape. The conduits 130, 130' and the first and second bracket 370b, 370b' are also respectively comprised of a same material. Accordingly, the conduits 130, 130' and the first bracket 370b respectively have equal mass and moments of inertia values. Additionally, the conduits 130, 130' and the first and second bracket 370b, 370b' are respectively disposed substantially equidistant from the sensor assembly center-plane CP₃₀₀ in a symmetrical manner. The conduits 130, 130' and the first and second bracket 370b, 370b' are therefore respectively symmetrically balanced about the sensor assembly center-plane CP₃₀₀. Since the first and second bracket 370b, 370b' are respectively affixed to the conduits 130, 130', an aggregate mass of the first conduit 130 and the first bracket 370b and an aggregate mass of the second conduit 130' and the second bracket 370b' are also symmetrically balanced.

The sensor assembly center-plane CP₃₀₀ is also located at least approximately at a midpoint of the electromagnetic transducer assembly 370, which may be a center of mass of the electromagnetic transducer assembly 370. As shown in FIG. 3, the electromagnetic transducer assembly 370 is comprised of electromagnetic transducer 370s and first and second bracket 370b, 370b'. The electromagnetic transducer 370s is mechanically coupled to the first and second bracket 370b, 370b', which is mechanically coupled to the conduits 130, 130'. The first and second bracket 370b, 370b' may be mechanically coupled to the conduits 130, 130' by brazing, welding, single piece forging, and/or any other suitable means. As shown in FIG. 3, the first and second bracket 370b, 370b' are affixed to the conduits 130, 130' with brazing. The electromagnetic transducer 370s is shown as being mechanically coupled to the first and second bracket 370b, 370b' using a screw as a fastener. However, the same and/or alternative transducer components may be affixed to alternative brackets by any suitable means, such as brazing, welding, fastening, adhesive, and/or the like.

The electromagnetic transducer 370s may be a displacement sensor comprised of two relatively positioned portions that enable the electromagnetic transducer 370s to determine a relative displacement between the two portions. As used herein, the term "displacement" encompasses any distance as well as any values derivable from the distances, such a velocity, acceleration, etc. As shown in FIG. 3, the two portions of the electromagnetic transducer 370s are a coil assembly 370sc and a magnet assembly 370sm.

The coil assembly 370sc and the magnet assembly 370sm are shown as being disposed on either side of a sensor assembly center-plane CP₃₀₀, but with some overlap due to a complementary non-interfering interface. With more particularity, the coil assembly 370sc has a cylindrical interface portion that has a smaller diameter than a cylindrical interface portion of the magnet assembly 370sm. Additionally, the coil assembly 370sc and the magnet assembly 370sm have similar shapes that are proximate and coaxial and are therefore complementary. Accordingly, the coil assembly 370sc extends into the magnet assembly 370sm while the magnet assembly 370sm encompasses the coil assembly 370sc. Also, the coil assembly 370sc and the magnet assembly 370sm do not contact each other but may electromagnetically interact and are therefore a non-interfering interface.

The coil assembly 370sc is shown as comprising a coil bobbin 372sc and an insert 374sc that are mechanically coupled to each other. With more particularity, the coil bobbin 372sc is affixed to the insert 374sc. As shown in FIG. 3, the coil bobbin 372sc is over-molded onto the insert 374sc. That is, the coil bobbin 372sc may be comprised of a non-conductive substance, such as a polymer, ceramic, or the like, that is over-molded onto the insert 374sc. Although not shown in FIG. 3, the electromagnetic transducer 370s includes a coil wrapped about the coil bobbin 372sc. The coil may carry a current due to a magnetic field of the magnet assembly 370sm.

The magnet assembly 370sm is shown as comprising a magnet 372sm and a magnet keeper 374sm. The magnet 372sm and the magnet keeper 374sm are mechanically coupled to each other. With more particularity, the magnet 372sm is affixed to the magnet keeper 374sm. The magnet 372sm and the magnet keeper 374sm may be mechanically affixed to each other using any suitable means, such as adhesive, press fit, locking features, fasteners, and/or the like. The magnet 372sm may provide a magnetic field that is shaped and condensed by the magnet keeper 374sm. Accordingly, the magnet keeper 374sm may be comprised of a ferromagnetic material, although any suitable material capable of shaping and/or condensing the magnetic field provided by the magnet 372sm may be employed.

Although the coil assembly 370sc and the magnet assembly 370sm, which are transducer components, are shown as comprised of two different parts, other alternative coil and/or magnet assemblies may respectively be comprised of more or fewer parts. For example, an alternative coil assembly (without the coil wire) may be comprised of a single integral piece of material that is forged, machined, or the like. Alternatively, another alternative coil assembly may be comprised of three or more parts. By way of illustration, an alternative insert may be comprised of several parts that may, for example, allow for more precise symmetric balancing of the transducer components. Similarly, other alternative magnet assemblies may be comprised of, for example, shims, adjustment features, or the like, that allows the magnet to be more positioned to aid in more precisely balancing the transducer components.

The coil and magnet assemblies 370sc, 370sm respectively move with the conduits 130, 130'. Accordingly, the coil assembly 370sc and the magnet assembly 370sm move to and from each other in a direction parallel with the transducer center of mass line CML₃₇₀ₛ. When the conduits 130, 130' opposingly oscillate, the coil and magnet assemblies 370sc, 370sm will also opposingly oscillate. The opposing oscillation of the coil and magnet assemblies 370sc, 370sm can therefore cause a magnetic field of the magnet assembly 370sm to vary in the coil of the coil assembly 370sc. As a result, the coil of the coil assembly 370sc may provide a voltage that is proportional to a relative velocity of the coil and magnet assemblies 370sc, 370sm. The voltage can be received by a meter electronics, such as the meter electronics 20 described above, to determine a measured value.

The electromagnetic transducer 370s may be symmetrically balanced about the sensor assembly center-plane CP₃₀₀. More specifically, the coil assembly 370sc and the magnet assembly 370sm have an equal mass value and are disposed equidistant from the sensor assembly center-plane CP₃₀₀. The coil assembly 370sc and the magnet assembly 370sm have equal mass values because the insert 374sc is selected to symmetrically balance the coil assembly 370sc with the magnet assembly 370sm. That is, the shape and density of the insert 374sc is selected such that the coil assembly 370sc has a mass value and position that is respectively equal to and equidistant from the sensor assembly center-plane CP₃₀₀ as the magnet assembly 370sm.

The shape and density, as well as an arrangement of components, of the insert 374sc may be selected during design, prototyping, fabrication, or the like, although any suitable means may be employed to select the shape and density of the insert 374sc. The insert 374sc is shown as having a cylindrical shape with an internal threaded portion that interfaces with a bolt. The bolt provides a compressive force to the insert 374sc and the first bracket 370b. Accordingly, the insert 374sc and the first bracket 370b are pressed together. As shown in FIG. 3, the insert 374sc includes a retaining groove that interfaces with a retaining tongue of the coil bobbin 372sc. The retaining groove and the retaining tongue are proximate the coil assembly 370sc. Accordingly, the coil bobbin 372sc is also compressed towards the first bracket 370b and, as shown in FIG. 3, the coil bobbin 372sc does not abut the first bracket 370b.

The insert 374sc may be comprised of a relatively heavy material, such as a metal or the like. That is, a mass value of the insert 374sc may be significantly greater than a mass value of the coil bobbin 372sc. As a result, a location of the coil assembly 370sc may be determined primarily by the insert 374sc. Accordingly, the location of the coil assembly 370sc may be determined with a sufficient precision by abutting only the insert 374sc to the first bracket 370b. Alternatively, an alternative coil bobbin and/or insert may both abut the first bracket 370b to more precisely determine the location of the coil assembly 370sc.

As can be appreciated, alternative electromagnetic transducers may be formed using different features that perform the same or similar function. For example, an adhesive may be employed instead of a tongue and groove to retain an alternative balance insert in a bobbin. Additionally, or alternatively, an alternative insert and/or bobbin may be constructed of more than one piece. The electromagnetic transducer 370s may also be positioned differently, have different sizes and shapes, alternative locating features, and/or the like. Some exemplary alternatives are discussed in the following.

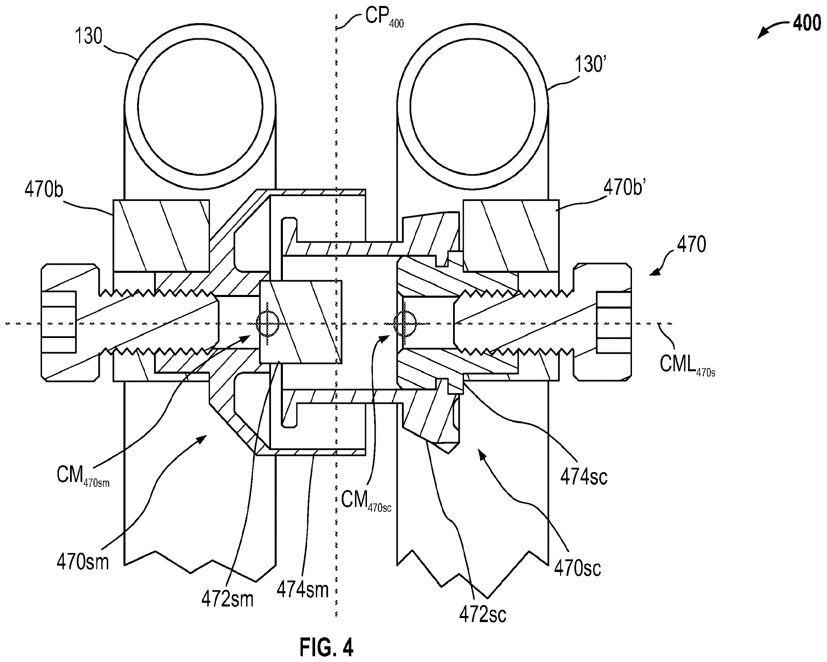

FIG. 4 shows a first alternative conduit-sensor assembly 400 that includes an electromagnetic transducer assembly 470 coupled to the conduits 130, 130' described with reference to FIG. 2. The conduits 130, 130' may be examples of the first and second oscillatory portions 13, 13' described with reference to FIG. 1. The electromagnetic transducer assembly 470 may be an example of the electromagnetic transducer 17 described with reference to FIG. 1 and the pick-off sensors 170l, 170r described with reference to FIG. 2. The electromagnetic transducer assembly 470 is mechanically coupled to the conduits 130, 130'. Also shown in FIG. 4 is a sensor assembly center-plane CP₄₀₀ that is equidistant between the first conduit 130 and the second conduit 130'. The electromagnetic transducer assembly 470 is comprised of a first and second bracket 470b, 470b' and electromagnetic transducer 470s. A transducer center of mass line CML₄₇₀ₛ is also shown. The electromagnetic transducer 470s is mechanically coupled to the conduits 130, 130' with the first and second bracket 470b, 470b'. With more particularity, a coil assembly 470sc is mechanically coupled to the first bracket 470b which is mechanically coupled to the first conduit 130 and the magnet assembly 470sm is mechanically coupled to the second bracket 470b' which is mechanically coupled to the second conduit 130'. A coil assembly center of mass CM_{470sc} and a magnet assembly center of mass CM₄₇₀ₛₘ are shown as lying on the transducer center of mass line CML₄₇₀ₛ.

As can be appreciated from FIG. 4, the conduits 130, 130' and the first and second bracket 470b, 470b' respectively have a same shape. The conduits 130, 130' and the first and second bracket 470b, 470b' are also respectively comprised of a same material. Accordingly, the conduits 130, 130' and the first bracket 470b respectively have equal mass and moments of inertia values. Additionally, the conduits 130, 130' and the first and second bracket 470b, 470b' are respectively disposed substantially equidistant from the sensor assembly center-plane CP₄₀₀ in a symmetrical manner. The conduits 130, 130' and the first and second bracket 470b, 470b' are therefore respectively symmetrically balanced about the sensor assembly center-plane CP₄₀₀. Accordingly, since the first and second bracket 470b, 470b' are respectively affixed to the conduits 130, 130', an aggregate mass of the first conduit 130 and the first bracket 470b and an aggregate mass of the second conduit 130' and the second bracket 470b' are also symmetrically balanced.

The sensor assembly center-plane CP₄₀₀ is also located at least approximately and substantially at a midpoint of the electromagnetic transducer assembly 470, which may be a center of mass of the electromagnetic transducer assembly 470. As shown in FIG. 4, the electromagnetic transducer assembly 470 is comprised of an electromagnetic transducer 470s and a first and second bracket 470b, 470b'. The electromagnetic transducer 470s is mechanically coupled to the first and second bracket 470b, 470b', which are mechanically coupled to the conduits 130, 130'. The first and second bracket 470b, 470b' may be mechanically coupled to the conduits 130, 130' by brazing, welding, single piece forging, and/or or any other suitable means. As shown in FIG. 4, the first and second bracket 470b, 470b' are affixed to the conduits 130, 130' with brazing. The electromagnetic transducer 470s is shown as being mechanically coupled to the first and second bracket 470b, 470b' using a screw as a fastener. However, the same or alternative transducer components may be affixed to alternative brackets by any suitable means, such as brazing, welding, fastening, adhesive, and/or the like.

The electromagnetic transducer 470s may be a displacement sensor comprised of two relatively positioned portions that enable the electromagnetic transducer 470s to determine a relative displacement between the two portions. As used herein, the term "displacement" encompasses any distance as well as any values derivable from the distance, such a velocity, acceleration, etc. As shown in FIG. 4, the two portions of the electromagnetic transducer 470s are a coil assembly 470sc and a magnet assembly 470sm.

The coil assembly 470sc and the magnet assembly 470sm are shown as being disposed on either side of a sensor assembly center-plane CP₄₀₀, but with some overlap due to a complementary and non-interfering interface. With more particularity, the coil assembly 470sc has a cylindrical interface portion that has a smaller diameter than a cylindrical interface portion of the magnet assembly 470sm. Accordingly, the coil assembly 470sc extends into the magnet assembly 470sm while the magnet assembly 470sm encompasses the coil assembly 470sc.

The coil assembly 470sc is shown as comprising a coil bobbin 472sc and an insert 474sc that are mechanically coupled to each other. With more particularity, the coil bobbin 472sc is affixed to the insert 474sc. As shown in FIG. 4, the coil bobbin 472sc is over-molded onto the insert 474sc. That is, the coil bobbin 472sc may be comprised of a non-conductive substance, such as a polymer, ceramic, or the like, that is over-molded onto the insert 474sc. Although not shown in FIG. 4, the electromagnetic transducer 470s includes a coil wrapped about the coil bobbin 472sc. The coil may carry a current due to a magnetic field of the magnet assembly 470sm.

The magnet assembly 470sm is shown as comprising a magnet 472sm and a magnet keeper 474sm. The magnet 472sm and the magnet keeper 474sm are mechanically coupled to each other. With more particularity, the magnet 472sm is affixed to the magnet keeper 474sm. The magnet 472sm and the magnet keeper 474sm may be mechanically affixed to each other using any suitable means, such as adhesive, press fit, fastening features, or the like. The magnet 472sm may provide a magnetic field that is shaped and condensed by the magnet keeper 474sm. Accordingly, the magnet keeper 474sm may be comprised of a ferromagnetic material, although any suitable material capable of shaping and/or condensing the magnetic field provided by the magnet 472sm may be employed.

Although the coil assembly 470sc and the magnet assembly 470sm are shown as comprised of two different parts, other alternative coil and magnet assemblies may respectively be comprised of more or fewer parts. For example, an alternative coil assembly may be comprised of a single integral piece of material that is forged, machined, or the like. Alternatively, another alternative coil assembly may be comprised of three or more parts. By way of illustration, an alternative insert may be comprised of several parts that may, for example, allow for more precise symmetric balancing of the transducer components. Similarly, an alternative magnet assembly may be comprised of, for example, shims, adjustment features, or the like, that allows the magnet 472sm to be more positioned to aid in more precisely balancing the transducer components.

The coil and magnet assemblies 470sc, 470sm respectively move with the conduits 130, 130'. Accordingly, the coil assembly 470sc and the magnet assembly 470sm move to and from each other in a direction parallel with the transducer center of mass line CML₄₇₀ₛ. When the conduits 130, 130' opposingly oscillate, the coil and magnet assemblies 470sc, 470sm will also opposingly oscillate. The opposing oscillation of the coil and magnet assemblies 470sc, 470sm can therefore cause a magnetic field of the magnet assembly 470sm to vary in the coil of the coil assembly 470sc. As a result, the coil of the coil assembly 470sc may provide a voltage that is proportional to a relative velocity of the coil and magnet assemblies 470sc, 470sm. The voltage can be received by a meter electronics, such as the meter electronics 20 described above, to determine a measured value.

The electromagnetic transducer 470s may be symmetrically balanced about the sensor assembly center-plane CP₄₀₀. More specifically, the coil assembly center of mass CM_{470sc} and the magnet assembly center of mass CM₄₇₀ₛₘ have an equal mass value and are disposed equidistant from the sensor assembly center-plane CP₄₀₀. The coil assembly center of mass CM_{470sc} and the magnet assembly center of mass CM₄₇₀ₛₘ have equal mass values because the insert 474sc is selected to symmetrically balance the coil assembly 470sc with the magnet assembly 470sm. That is, the shape and density of the insert 474sc is selected such that the coil assembly center of mass CM_{470sc} has a mass value and position that is respectively equal to and equidistant from the sensor assembly center-plane CP₄₀₀ as the magnet assembly center of mass CM₄₇₀ₛₘ.

The shape and density of the insert 474sc may be selected during design, prototyping, fabrication, or the like, although any suitable means may be employed to select the shape and density of the insert 474sc. The insert 474sc is shown as having a cylindrical shape with an internal threaded portion that interfaces with a bolt. The bolt provides a compressive force to the insert 474sc and the first bracket 470b. Accordingly, the insert 474sc and the first bracket 470b are compressed together. As shown in FIG. 4, the insert 474sc includes a retaining groove that interfaces with a retaining tongue of the coil bobbin 472sc. Accordingly, the coil bobbin 472sc is also compressed towards the first bracket 470b, as shown in FIG. 4, and the coil bobbin 472sc does not abut the first bracket 470b.

The insert 474sc may be comprised of a relatively heavy material, such as a metal or the like. That is, a mass value of the insert 474sc may be significantly greater than a mass value of the coil bobbin 472sc. As a result, a location of the coil assembly center of mass CM_{470sc} may be determined primarily by the insert 474sc. Accordingly, the location of the coil assembly center of mass CM_{470sc} may be determined with a sufficient precision by abutting only the insert 474sc to the first bracket 470b. Alternatively, an alternative bobbin and insert may both abut the first bracket 470b to more precisely determine the location of the coil assembly center of mass CM_{470sc}.

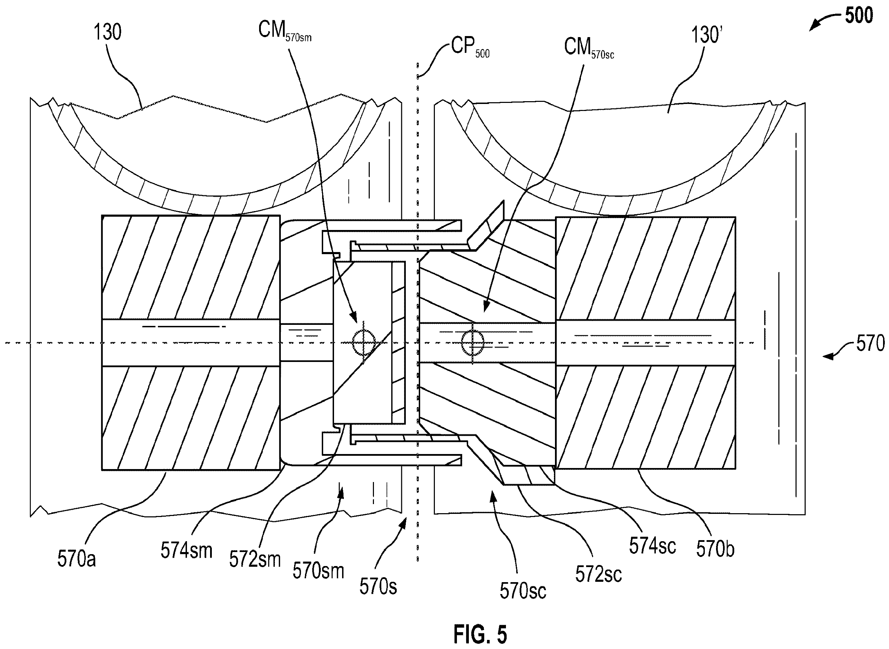

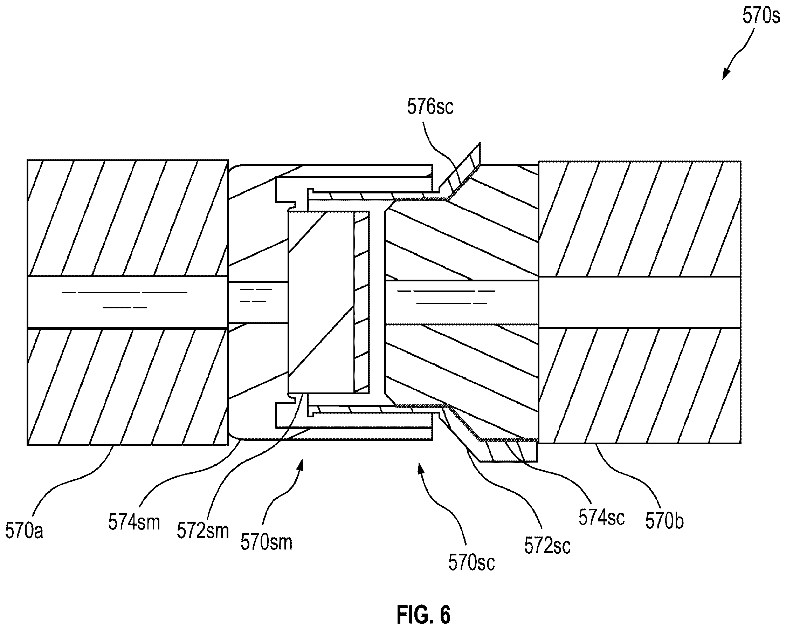

**FIGS. 5** **and** **6** show a second alternative conduit-sensor assembly 500 that includes an electromagnetic transducer assembly 570 coupled to the conduits 130, 130' described with reference to FIG. 2. With more particularity, FIG. 5 shows the second alternative conduit-sensor assembly 500 and FIG. 6 shows a portion of the electromagnetic transducer assembly 570 without the conduits 130, 130' for clarity. The conduits 130, 130' may be examples of the first and second oscillatory portions 13, 13' described with reference to FIG. 1. The electromagnetic transducer assembly 570 may be an example of the electromagnetic transducer 17 described with reference to FIG. 1 and the pick-off sensors 170l, 170r described with reference to FIG. 2. The electromagnetic transducer assembly 570 is mechanically coupled to the conduits 130, 130'. Also shown in FIG. 5 is a sensor assembly center-plane CP₃₀₀ that is equidistant between the first conduit 130 and the second conduit 130'. The electromagnetic transducer assembly 570 is comprised of a first and second bracket 570b, 570b' and electromagnetic transducer 570s. A transducer center of mass line CML₅₇₀ₛ is also shown in FIG. 5. The electromagnetic transducer 570s is mechanically coupled to the conduits 130, 130' with the first and second bracket 570b, 570b'. With more particularity, a coil assembly 570sc is mechanically coupled to the first bracket 570b which is mechanically coupled to the first conduit 130 and the magnet assembly 570sm is mechanically coupled to the second bracket 570b' which is mechanically coupled to the second conduit 130'. A coil assembly center of mass CM_{370sc} and a magnet assembly center of mass CM₃₇₀ₛₘ are shown as lying on the transducer center of mass line CML₅₇₀ₛ.

As can be appreciated from FIG. 5, the conduits 130, 130' and the first and second bracket 570b, 570b' respectively have a same shape. The conduits 130, 130' and the first and second bracket 570b, 570b' are also respectively comprised of a same material. Accordingly, the conduits 130, 130' and the first and second bracket 570b, 570b' respectively have equal mass and moments of inertia values. Additionally, the conduits 130, 130' and the first and second bracket 570b, 570b' are respectively disposed substantially equidistant from the sensor assembly center-plane CP₅₀₀ in a symmetrical manner. The conduits 130, 130' and the first and second bracket 570b, 570b' are therefore respectively symmetrically balanced about the sensor assembly center-plane CP₅₀₀. Since the first and second bracket 570b, 570b' are respectively affixed to the conduits 130, 130', an aggregate mass of the first conduit 130 and the first bracket 570b and an aggregate mass of the second conduit 130' and the second bracket 570b' are also symmetrically balanced.

The sensor assembly center-plane CP₅₀₀ is also located at least approximately at a midpoint of the electromagnetic transducer assembly 570, which may be a center of mass of the electromagnetic transducer assembly 570. As shown in FIGS. 5 and 6, the electromagnetic transducer 570s is mechanically coupled to the first and second bracket 570b, 570b', which is mechanically coupled to the conduits 130, 130'. The first and second bracket 570b, 570b' may be mechanically coupled to the conduits 130, 130' by brazing, welding, single piece forging, and/or or any other suitable means. As shown in FIG. 5, the first and second bracket 570b, 570b' are affixed to the conduits 130, 130' with brazing. The electromagnetic transducer 570s is shown as being mechanically coupled to the first and second bracket 570b, 570b' using a screw as a fastener. However, alternative transducer components may be affixed to alternative brackets by any suitable means, such as brazing, welding, fastening, adhesive, and/or the like.

As shown in FIGS. 5 and 6, the two portions of the electromagnetic transducer 570s are a coil assembly 570sc and a magnet assembly 570sm. In FIG. 5, the coil assembly 570sc and the magnet assembly 570sm are shown as being disposed on either side of a sensor assembly center-plane CP₅₀₀, but with some overlap due to a complementary and non-interfering interface. With more particularity, the coil assembly 570sc has a cylindrical interface portion that has a smaller diameter than a cylindrical interface portion of the magnet assembly 570sm. Accordingly, the coil assembly 570sc extends into the magnet assembly 570sm while the magnet assembly 570sm encompasses the coil assembly 570sc.

The coil assembly 570sc is shown as comprising a coil bobbin 572sc and an insert 574sc that are mechanically coupled to each other. With more particularity, the coil bobbin 572sc is affixed to the insert 574sc. As shown in FIG. 6, the coil bobbin 572sc is adhered onto the insert 574sc with an adhesive 576sc. That is, the coil bobbin 572sc may be comprised of a non-conductive substance, such as a polymer, ceramic, or the like, that is adhered onto the insert 574sc. The adhesive may be an epoxy, thread locker adhesive, polyurethane adhesive, room temperature vulcanizing silicon, and/or the like. Although not shown in FIGS. 5 and 6 for clarity, the electromagnetic transducer 570s includes a coil wrapped about the coil bobbin 572sc. The coil may carry a current due to a magnetic field of the magnet assembly 570sm.

The magnet assembly 570sm is shown as comprising a magnet 572sm and a magnet keeper 574sm. The magnet 572sm and the magnet keeper 574sm are mechanically coupled to each other. With more particularity, the magnet 572sm is affixed to the magnet keeper 574sm. The magnet 572sm and the magnet keeper 574sm may be mechanically affixed to each other using any suitable means, such as adhesive, press fit, fastening features, or the like. The magnet 572sm may provide a magnetic field that is shaped and condensed by the magnet keeper 574sm. Accordingly, the magnet keeper 574sm may be comprised of a ferromagnetic material, although any suitable material capable of shaping and/or condensing the magnetic field provided by the magnet 572sm may be employed.

Although the coil assembly 570sc and the magnet assembly 570sm are each shown as comprised of two different parts, other coil assemblies and magnet assemblies may respectively be comprised of more or fewer parts. For example, an alternative coil assembly may be comprised of a single integral piece of material that is forged, machined, or the like. Alternatively, another coil assembly may be comprised of three or more parts. By way of illustration, an alternative insert may be comprised of several parts that may, for example, allow for more precise symmetric balancing of the transducer components. Similarly, an alternative magnet assembly may be comprised of, for example, shims, adjustment features, or the like, that allows the magnet to be more positioned to aid in more precisely balancing the transducer components.

Referring to FIG. 5, the coil and magnet assemblies 570sc, 570sm respectively move with the conduits 130, 130'. Accordingly, the coil assembly 570sc and the magnet assembly 570sm move to and from each other in a direction parallel with the transducer center of mass line CML₅₇₀ₛ. When the conduits 130, 130' opposingly oscillate, the coil and magnet assemblies 570sc, 570sm will also opposingly oscillate. The opposing oscillation of the coil and magnet assemblies 570sc, 570sm can therefore cause a magnetic field of the magnet assembly 570sm to vary in the coil of the coil assembly 570sc. As a result, the coil of the coil assembly 570sc may provide a voltage that is proportional to a relative velocity of the coil and magnet assemblies 570sc, 570sm. The voltage can be received by a meter electronics, such as the meter electronics 20 described above, to determine a measured value.

The electromagnetic transducer 570s may be symmetrically balanced about the sensor assembly center-plane CP₅₀₀. More specifically, referring to FIG. 5, the coil assembly center of mass CM_{570sc} and the magnet assembly center of mass CM₅₇₀ₛₘ have an equal mass value and are disposed equidistant from the sensor assembly center-plane CP₅₀₀. The coil assembly center of mass CM_{570sc} and the magnet assembly center of mass CM₅₇₀ₛₘ have equal mass values because the insert 574sc is selected to symmetrically balance the coil assembly 570sc with the magnet assembly 570sm. That is, the shape and density of the insert 574sc is selected such that the coil assembly center of mass CM_{570sc} has a mass value and position that is respectively equal to and equidistant from the sensor assembly center-plane CP₅₀₀ as the magnet assembly center of mass CM₅₇₀ₛₘ.

The shape and density of the insert 574sc may be selected during design, prototyping, fabrication, or the like, although any suitable means may be employed to select the shape and density of the insert 574sc. The insert 574sc is shown as having a cylindrical shape with an internal threaded portion that interfaces with a bolt. The bolt provides a compressive force to the insert 574sc and the first bracket 570b. Accordingly, the insert 574sc and the first bracket 570b are compressed together. As shown in FIG. 5, the insert 574sc includes an interfacing chamfer that interfaces with an interfacing cone of the coil bobbin 572sc. Accordingly, the coil bobbin 572sc is also compressed towards the first bracket 570b, as shown in FIG. 5, and the coil bobbin 572sc does not abut the first bracket 570b.

The insert 574sc may be comprised of a relatively heavy material, such as a metal or the like. That is, a mass value of the insert 574sc may be significantly greater than a mass value of the coil bobbin 572sc. As a result, a location of the coil assembly center of mass CM_{570sc} may be determined primarily by the insert 574sc. Accordingly, the location of the coil assembly center of mass CM_{570sc} may be determined with a sufficient precision by abutting only the insert 574sc to the first bracket 570b. Alternatively, for example, an alternative coil bobbin and insert may both abut the first bracket 570b to more precisely determine the location of the coil assembly center of mass CM570sc.

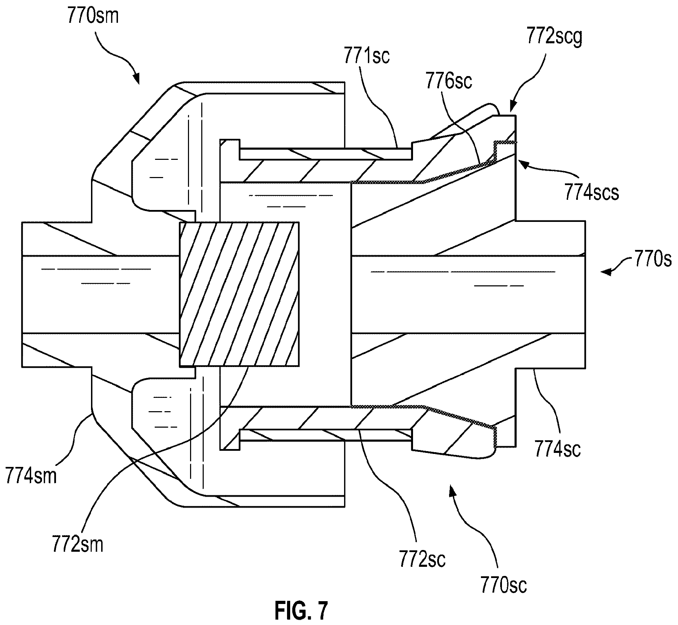

As can be appreciated, the interfacing chamfer of the insert 574sc and the interfacing cone of the coil bobbin 572sc positions the coil bobbin 572sc relative to the insert 574sc. As can be appreciated, this may be suitable for less precise applications where precision measurements are not needed. Other applications may require more precise positioning, which can be accomplished by utilizing other locating features, an example of which is discussed in the following with reference to FIG. 7.

**FIG. 7** shows electromagnetic transducer 770s that may be in a third alternative electromagnetic transducer configured to couple to the conduits 130, 130' (not shown in FIG. 7) described with reference to FIG. 2. The electromagnetic transducer 770s may be an example of the electromagnetic transducer 17 described with reference to FIG. 1 and the pick-off sensors 170l, 170r described with reference to FIG. 2.

As shown in FIG. 7, the electromagnetic transducer 770s is configured to mechanically couple to the sensor brackets, which may be mechanically coupled to the conduits 130, 130'. The electromagnetic transducer 770s may be mechanically coupled to the sensor brackets using a screw as a fastener. Additionally, or alternatively, the same or other transducer components may be affixed to sensor brackets by any suitable means, such as brazing, welding, fastening, and/or the like.

As shown in FIG. 7, the two portions of the electromagnetic transducer 770s are a coil assembly 770sc and a magnet assembly 770sm. In FIG. 7, the coil assembly 770sc and the magnet assembly 770sm have some overlap due to a complementary and non-interfering interface. With more particularity, the coil assembly 770sc has a cylindrical interface portion that has a smaller diameter than a cylindrical interface portion of the magnet assembly 770sm. Accordingly, the coil assembly 770sc extends into the magnet assembly 770sm while the magnet assembly 770sm encompasses the coil assembly 770sc.

The coil assembly 770sc is shown as comprising a coil bobbin 772sc and an insert 774sc that are mechanically coupled to each other. With more particularity, the coil bobbin 772sc is affixed to the insert 774sc. As shown in FIG. 7, the coil bobbin 772sc is adhered onto the insert 774sc with an adhesive 776sc. That is, the coil bobbin 772sc may be comprised of a non-conductive substance, such as a polymer, ceramic, or the like, that is adhered onto the insert 774sc. The adhesive may be an epoxy, thread locker adhesive, polyurethane adhesive, and/or the like. As shown in FIG. 7, the electromagnetic transducer 770s includes a coil 771sc wrapped about the coil bobbin 772sc. The coil 771sc may carry a current due to a magnetic field of the magnet assembly 770sm.

The magnet assembly 770sm is shown as comprising a magnet 772sm and a magnet keeper 774sm. The magnet 772sm and the magnet keeper 774sm are mechanically coupled to each other. With more particularity, the magnet 772sm is affixed to the magnet keeper 774sm. The magnet 772sm and the magnet keeper 774sm may be mechanically affixed to each other using any suitable means, such as adhesive, press fit, fastening features, or the like. The magnet 772sm may provide a magnetic field that is shaped and condensed by the magnet keeper 774sm. Accordingly, the magnet keeper 774sm may be comprised of a ferromagnetic material, although any suitable material capable of shaping and/or condensing the magnetic field provided by the magnet 772sm may be employed.

Although the coil assembly 770sc and the magnet assembly 770sm are each shown as comprised of two different parts, other alternative coil and magnet assemblies may respectively be comprised of more or fewer parts. For example, an alternative coil assembly may be comprised of a single integral piece of material that is forged, machined, or the like. Alternatively, another coil assembly may be comprised of three or more parts. By way of illustration, an alternative insert may be comprised of several parts that may, for example, allow for more precise symmetric balancing of the transducer components. Similarly, an alternative magnet assembly may be comprised of, for example, shims, adjustment features, or the like, that allows the magnet 772sm to be positioned to aid in more precisely balancing the electromagnetic transducer 770s.

The coil and magnet assemblies 770sc, 770sm may respectively move with the conduits 130, 130'. Accordingly, the coil assembly 770sc and the magnet assembly 770sm move to and from each other in a direction parallel with the center plane of the device. When the conduits 130, 130' opposingly oscillate, the coil and magnet assemblies 770sc, 770sm will also opposingly oscillate. The opposing oscillation of the coil and magnet assemblies 770sc, 770sm can therefore cause a magnetic field of the magnet assembly 770sm to vary in the coil 771sc of the coil assembly 770sc. As a result, the coil 771sc of the coil assembly 770sc may provide a voltage that is proportional to a relative velocity of the coil and magnet assemblies 770sc, 770sm. The voltage can be received by a meter electronics, such as the meter electronics 20 described above, to determine a measured value.

The electromagnetic transducer 770s may be symmetrically balanced about the center plane of the device. More specifically, the center of mass of the coil assembly 770sc and the magnet assembly 770sm have an equal mass value and may be disposed equidistant from the center plane of the device. The center of mass of the coil assembly 770sc and the magnet assembly 770sm may have equal mass values because the insert 774sc is selected to symmetrically balance the coil assembly 770sc with the magnet assembly 770sm. That is, the shape and density of the insert 774sc is selected such that the center of mass of the coil assembly 770sc has a mass value and position that is respectively equal to and equidistant from the center of plane of the device as the center of mass of the magnet assembly 770sm.

The shape and density of the insert 774sc may be selected during design, prototyping, fabrication, or the like, although any suitable means may be employed to select the shape and density of the insert 774sc. The insert 774sc is shown as having a cylindrical shape with an internal threaded portion that can interface with a bolt. The bolt may provide a compressive force to the insert 774sc and the sensor bracket. Accordingly, the insert 774sc and the sensor bracket may be compressed together. As shown in FIG. 7, the insert 774sc includes an interfacing chamfer that interfaces with an interfacing cone of the coil bobbin 772sc. Accordingly, the coil bobbin 772sc may also be compressed towards the sensor brackets so that the coil bobbin 772sc and the insert 774sc abuts the sensor bracket. With more particularity, the insert 774sc includes an insert shoulder 774scs that interfaces with a coil bobbin groove 772scg of the coil bobbin 772sc. As can be appreciated, the coil bobbin groove 772scg may precisely position the insert 774sc relative to the coil bobbin 772sc.

### Multi-piece insert

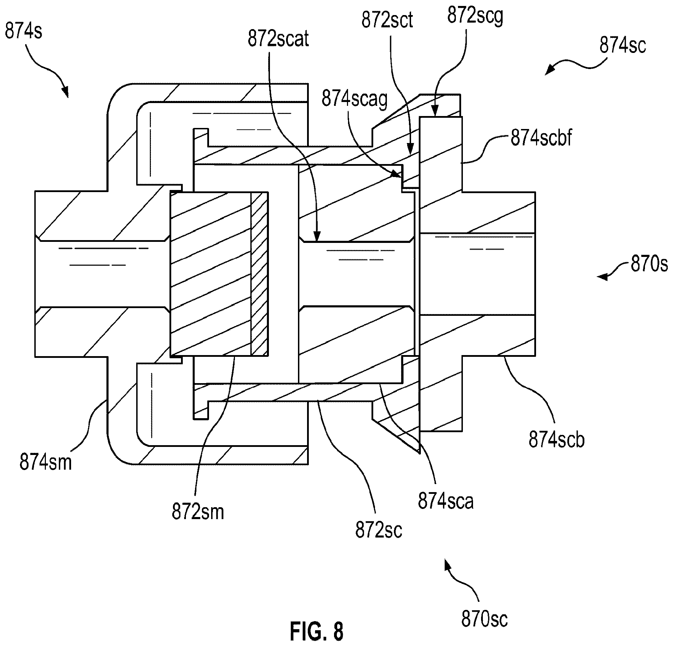

FIG. 8 shows electromagnetic transducer 870s that may be in a fourth alternative electromagnetic transducer configured to couple to the conduits 130, 130' described with reference to FIG. 2. The conduits 130, 130' are not shown in FIG. 8 for clarity. The electromagnetic transducer 870s may be an example of the electromagnetic transducer 17 described with reference to FIG. 1 and the pick-off sensors 170l, 170r described with reference to FIG. 2.

As shown in FIG. 8, the electromagnetic transducer 870s is configured to mechanically couple to the sensor brackets, which may be mechanically coupled to the conduits 130, 130'. The electromagnetic transducer 870s may be mechanically coupled to the sensor brackets using a screw as a fastener (not shown). Additionally, or alternatively, other transducer components may be affixed to sensor brackets by any suitable means, such as brazing, welding, fastening, and/or the like.

As shown in FIG. 8, the electromagnetic transducer 870s is comprised of a coil assembly 870sc and a magnet assembly 870sm. In FIG. 8, the coil assembly 870sc and the magnet assembly 870sm have some overlap due to a complementary and non-interfering interface. With more particularity, the coil assembly 870sc has a cylindrical interface portion that has a smaller diameter than a cylindrical interface portion of the magnet assembly 870sm. Accordingly, the coil assembly 870sc extends into the magnet assembly 870sm while the magnet assembly 870sm encompasses the coil assembly 870sc.

The coil assembly 870sc is shown as comprising a coil bobbin 872sc and an insert 874sc that are mechanically coupled to each other. With more particularity, the insert 874sc is comprised of an internal insert 874sca and an external insert 874scb that are respectively disposed internal and external to the coil bobbin 872sc. The internal insert 874sca is shown as including an internal insert groove 874scag that interfaces with a retaining tongue 872sct of the coil bobbin 872sc. Additionally, the external insert 874scb includes an external insert flange 874scbf that interfaces with a coil bobbin groove 872scg of the coil bobbin 872sc. As can be appreciated, the coil bobbin groove 872scg may precisely locate the external insert 874scb relative to the coil bobbin 872sc and the internal insert 874sca.

The coil bobbin 872sc is affixed to the insert 874sc. As shown in FIG. 8, the coil bobbin 872sc is over molded onto the internal insert 874sca. However, any suitable method may be employed, such as, for example, using an adhesive, such as glue, or compression due to be being affixed to a bracket. A bolt (not shown) may interface with the threaded portion 872scat to compress the internal insert 874sca into the coil bobbin 872sc which may in turn be compressed into the external insert 874scb. The coil bobbin 872sc may be comprised of a non-conductive substance, such as a polymer, ceramic, or the like, that is adhered onto the insert 874sc. Although not shown in FIG. 8, the coil assembly 870sc includes a coil wrapped about the coil bobbin 872sc. The coil may carry a current due to a magnetic field of the magnet assembly 870sm.

The magnet assembly 870sm is shown as comprising a magnet 872sm and a magnet keeper 874sm. The magnet 872sm and the magnet keeper 874sm are mechanically coupled to each other. With more particularity, the magnet 872sm is affixed to the magnet keeper 874sm. The magnet 872sm and the magnet keeper 874sm may be mechanically affixed to each other using any suitable means, such as adhesive, press fit, fastening features, or the like. The magnet 872sm may provide a magnetic field that is shaped and condensed by the magnet keeper 874sm. Accordingly, the magnet keeper 874sm may be comprised of a ferromagnetic material, although any suitable material capable of shaping and/or condensing the magnetic field provided by the magnet 872sm may be employed.

Although the coil assembly 870sc and the magnet assembly 870sm are each shown as comprised of two different parts, other alternative coil assemblies and magnet assemblies may respectively be comprised of more or fewer parts. For example, an alternative coil assembly may be comprised of a single integral piece of material that is forged, machined, or the like. Alternatively, another coil assembly may be comprised of three or more parts. By way of illustration, an alternative insert may be comprised of several parts that may, for example, allow for more precise symmetric balancing of the transducer components. Similarly, an alternative magnet assembly may be comprised of, for example, shims, adjustment features, or the like, that allows the magnet to be more positioned to aid in more precisely balancing the transducer components.

The coil and magnet assemblies 870sc, 870sm may respectively move with the conduits 130, 130'. Accordingly, the coil assembly 870sc and the magnet assembly 870sm move to and from each other in a direction parallel with the center plane of the device. When the conduits 130, 130' opposingly oscillate, the coil and magnet assemblies 870sc, 870sm will also opposingly oscillate. The opposing oscillation of the coil and magnet assemblies 870sc, 870sm can therefore cause a magnetic field of the magnet assembly 870sm to vary in the coil of the coil assembly 870sc. As a result, the coil of the coil assembly 870sc may provide a voltage that is proportional to a relative velocity of the coil and magnet assemblies 870sc, 870sm. The voltage can be received by a meter electronics, such as the meter electronics 20 described above, to determine a measured value.

The electromagnetic transducer 870s may be symmetrically balanced about the center plane of the device. More specifically, the center of mass of the coil assembly 870sc and the magnet assembly 870sm have an equal mass value and may be disposed equidistant from the center plane of the device. The center of mass of the coil assembly 870sc and the magnet assembly 870sm may have equal mass values because the insert 874sc is selected to symmetrically balance the coil assembly 870sc with the magnet assembly 870sm. That is, the shape and density of the insert 874sc is selected such that the center of mass of the coil assembly 870sc has a mass value and position that is respectively equal to and equidistant from the center of plane of the device as the center of mass of the magnet assembly 870sm.

The shape and density of the insert 874sc may be selected during design, prototyping, fabrication, or the like, although any suitable means may be employed to select the shape and density of the insert 874sc. The internal insert 874sca is shown as having a cylindrical shape with the threaded portion 872scat that can interface with a bolt. The bolt may provide a compressive force to the insert 874sc and the sensor bracket. Accordingly, the insert 874sc and the sensor bracket may be compressed together. As shown in FIG. 8, the insert 874sc includes the internal insert groove 874scag that interfaces with the retaining tongue 872sct of the coil bobbin 872sc. Accordingly, the internal insert 874sca may also be compressed towards the sensor bracket so that the external insert 874scb abuts the sensor bracket.

The insert 874sc may be comprised of a relatively heavy material, such as a metal or the like. That is, a mass value of the insert 874sc may be significantly greater than a mass value of the coil bobbin 872sc. As a result, a location of the center of mass of the coil assembly 870sc may be determined primarily by the insert 874sc. Accordingly, the location of the center of mass of the coil assembly 870sc may be determined with sufficient precision by abutting both the coil bobbin 872sc and the insert 874sc to the sensor bracket.

### Coefficient of thermal expansion

The foregoing electromagnetic transducers 370s, 470s, 570s, 770s, 870s may be subjected to temperature variations of differing ranges. For example, some applications may be consistently high temperature while others may be consistently low temperature. Other applications may have a more significant temperature variation that includes relatively low and high temperatures. As can be appreciated, significant temperature variation can cause components that are not thermal expansion compatibles to expand and contract at different amounts relative to a same change in temperature. As a result, assemblies that include thermal expansion incompatible components may fail. To avoid such failures, the electromagnetic transducer 370s, 470s, 570s, 770s, 870s may be comprised of thermal expansion compatible components and materials.

Thermal expansion compatible components and/or materials may be comprised of substances that have coefficients of thermal expansion ("CTE") that are substantially equal. The CTE may be substantially equal if the components and/or materials expand and contract in a substantially uniform manner such that the components and/or materials meet design functions. As can be appreciated, the components and/or materials may be thermal expansion compatibles even though their respective CTEs are not exactly equal. By way of illustration, an insert press fit into a substrate may be thermal expansion compatible with the substrate if the insert's CTE is slightly greater than the substrate's CTE. As can be appreciated, if the insert's CTE is less than the substrate's CTE, then the insert and the substrate may not be thermal expansion compatibles. That is, the design function of a press fit is still met if the insert's CTE is greater than the substrate's CTE.

In addition, a specified or expected temperature range may also determine if the components and/or materials are thermal expansion compatibles. For example, if an application is considered only a high temperature application, the insert and substrate discussed above may be thermal expansion compatibles if the insert is press fit into the substrate at room temperature. That is, a subsequent elevation of temperature would cause a greater expansion of the insert relative to an expansion of the substrate thereby increasing a retention force of the press fit. Conversely, if the specified temperature range is a very low temperature, then the insert and substrate assembled at room temperature may not be thermal expansion compatibles because the insert will shrink more than the substrate. Accordingly, the retention force of the press fit will decrease.

Thermal expansion compatibility may also take reliability related issues into consideration. For example, some materials may be more brittle than others. As a result, if the substrate is more brittle than the insert, the insert may cause the substrate to crack (e.g., microfractures). As can be appreciated, the crack forms when there is a change in temperature. Accordingly, a crack forming in a single temperature cycle from room temperature to the very high but also very narrow temperature range may not be sufficient to reduce the retention force of the press fit. That is, the narrow temperature range may not be sufficient to cause additional cracks to form. However, if the very high temperature range is also very large and the insert and substrate are subjected to repeated cycles over the very high and very narrow temperature range, then additional cracks may form with each temperature cycle thereby leading to reliability related issues such as a decrease in the retention force of the insert. Similar issues may be present with other components and/or materials, such as adhesives, as the following illustrates.

As discussed in the foregoing, the electromagnetic transducer 570s and the electromagnetic transducer 770s include the adhesive 576sc, 776sc to affix the insert 574sc, 774sc to the coil bobbin 572sc, 772sc. As can be seen in FIGS. 6 and 7, the insert 574sc, 774sc is disposed within and has a different cross-sectional shape than the coil bobbin 572sc, 772sc. Accordingly, a change in temperature of the electromagnetic transducer 570s, 770s may cause a relative displacement between the coil bobbin 572sc, 772sc and insert 574sc, 774sc. A magnitude of the relative displacement may be proportional to the temperature change and a difference between the CTEs of the coil bobbin 572sc, 772sc and insert 574sc, 774sc.

Due the relative displacement, the adhesive 576sc, 776sc are subjected to stress. For example, the adhesive 576sc, 776sc may be subjected to, for example, a compressive shearing stress. Therefore, a relatively brittle adhesive may fail when subjected to a specified given number of cycles over a given temperature range whereas a relatively ductile adhesive would not. A material may be selected for the adhesive 576sc, 776sc based on the CTEs of the coil bobbin 572sc, 772sc and insert 574sc, 774sc, such as a difference between the CTEs, an operating temperature range, the number of temperature cycles, and/or the like. Such an evaluation may be made using empirical data, simulations of a solid model, and/or the like.

Another consideration may be a functional specification of the electromagnetic transducer 570s, 770s. With more specificity, a flexible adhesive, such as silicon-based adhesives, may allow for the electromagnetic transducer 570s, 770s to operate over a wide temperature range. However, such flexibility may also damp an opposing oscillation between the coil assembly 570sc, 770sc and the magnet assembly 570sm, 770sm. The damping can cause less accurate measurements due to the damping's effect on a phase of the relative oscillation. A more rigid adhesive may reduce or eliminate such damping but may not be suitable for a wide range of temperatures due to possible mechanical failures in the adhesive 576sc, 776sc. Accordingly, the material for the adhesive 576sc, 776sc may be selected for specific temperature ranges.

As an exemplary selection, epoxy adhesives may be acceptable for attaching a bobbin to an insert, but may have a high loss factor, which is analogous to damping. For example, Xian Wang et. al., Damping properties of flexible epoxy resin, J. Wuhan Univ. Technol.-Mat. Sci. Edit. 23, 411-414 (2008) finds that epoxy adhesives may have a loss factor that is as high as 1.57. As discussed above, damping may influence the phase measurement of the vibratory meter 5 and thus an accuracy of a measured mass flow rate value. Also as discussed above, low damping materials are preferred assuming all other adhesive selection criteria are irrelevant. Additionally, U.S. Pat. Pub. No. 2017/0218239 to Rhodes teaches that silicon-based adhesives may have lower damping/loss factor of about 0.1. Accordingly, silicon-based adhesives may be preferable over epoxy-based adhesives.

As can be appreciated, various methods may form the symmetrically oscillatory device 1 and the electromagnetic transducer 17 described with reference to FIG. 1. The following illustrate methods of forming an electromagnetic transducer, such as the electromagnetic transducers 370s, 470s described with reference to FIGS. 3 and 4 and the electromagnetic transducers 570s, 770s described with reference to FIGS. 5-8.

### Methods for forming an electromagnetic transducer

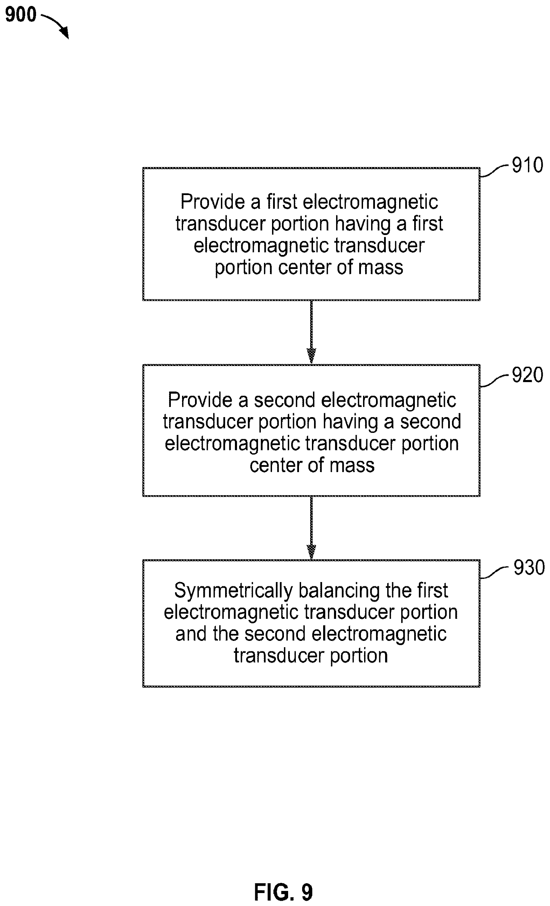

FIG. 9 shows a first method 900 of forming an electromagnetic transducer for symmetric oscillations. As shown in FIG. 9, the method 900, in step 910, may provide a first electromagnetic transducer portion, which may be the magnet assembly 17a described above with reference to FIG. 1, having a first electromagnetic transducer portion center of mass CM₁₇ₐ. In step 920, the method 900 may provide a second electromagnetic transducer portion, which may be the coil assembly 17b described above with reference to FIG. 1, having a second electromagnetic transducer portion center of mass CM₁₇₈. In step 930, the method 900 further comprises symmetrically balancing the first electromagnetic transducer portion and the second electromagnetic transducer portion.

The step 910 of providing the first electromagnetic transducer portion may comprise configuring the first electromagnetic transducer portion to mechanically couple to a first oscillatory portion of the symmetrically oscillatory device. Similarly, in step 920, providing the second electromagnetic transducer portion may comprise configuring the first electromagnetic transducer portion to mechanically couple to a second oscillatory portion of the symmetrically oscillatory device. The first and second oscillatory oscillator portions of method 900 may be the first and second oscillatory portions 13, 13' described with reference to FIG. 1, although any suitable oscillatory portions may be employed.

In step 930, symmetrically balancing the first electromagnetic transducer portion and the second electromagnetic transducer portion may comprise positioning the first electromagnetic transducer portion center of mass and the second electromagnetic transducer portion center of mass to be equidistant from a device center plane of the symmetrically oscillatory device and on a transducer center of mass line. As can be appreciated, the symmetrically oscillatory device of method 900 may be the symmetrically oscillatory device described with reference to FIG. 1.

The method 900 may further comprise defining and positioning the center plane of the symmetrically oscillatory device at points equidistant between the oscillatory portion and the second oscillatory portion. The method 900 may also further comprise orienting the transducer center of mass line to be orthogonal to the device center plane of the symmetrically oscillatory device. Also additionally, or alternatively, the method 900 may further comprise configuring the first electromagnetic transducer portion and the second electromagnetic transducer portion to have a same moment of inertia value.

Providing the first electromagnetic transducer portion may comprise providing a magnet assembly and providing the second electromagnetic transducer portion comprises providing a coil assembly. For example, the coil assembly and magnet assembly of method 900 may respectively be the coil assemblies 370sc, 470sc, 570sc-870sc and the magnet assemblies 370sm, 470sm, 570sm-870sm described with reference to FIGS. 3-8, although any suitable coil and magnet assemblies may be employed. Additionally, or alternatively, providing the magnet assembly may comprise providing a magnet and a magnet keeper affixed to the magnet and providing the coil assembly comprises providing a bobbin and an insert affixed to the bobbin. The insert of method 900 may be selected to symmetrically balance the magnet assembly and the coil assembly.

As can be appreciated from the foregoing discussion with reference to FIGS. 2-8, the symmetrically oscillatory device may be a vibratory meter configured to measure properties of a material, although any symmetrically oscillatory device may be formed. For example, the first oscillatory portion and the second oscillatory portion of method 900 may be the conduits of the vibratory meter 5 described above. Accordingly, the first and second oscillatory portions of method 900 may respectively be comprised of the conduits 130, 130' described with reference to FIGS. 2-5, although any suitable oscillatory portions, such as vibratory tines of a density meter, may be employed.

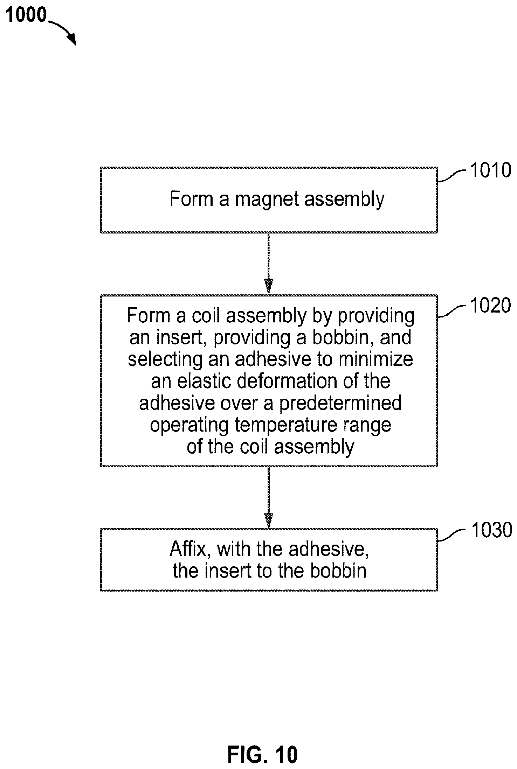

**FIG. 10** shows a second method 1000 of forming an electromagnetic transducer for symmetric oscillations. As shown in FIG. 10, the method 1000 begins in step 1010 by forming a magnet assembly which may be, by way of illustration, the magnet assemblies 570sm, 770sm described above with reference to FIGS. 5-7, although any suitable magnet assembly may be formed. The method 1000, in step 1020, forms a coil assembly. Step 1020 may comprise providing an insert, providing a bobbin, selecting an adhesive to minimize an elastic deformation of the adhesive over a predetermined operating temperature range of the coil assembly. The coil assembly of method 1000 may be the coil assemblies 570sc, 770sc described in the foregoing. In step 1030, the method affixes, with the adhesive, the insert to the bobbin. The method 1000 may further comprise forming a non-interfering interface between the magnet assembly and the coil assembly. The non-interfering interface may be complementary.

The step 1010 of forming a magnet assembly may comprise forming, for example, the magnet assemblies described above 570sm, 770sm, although any suitable magnet assembly may be employed. Forming the magnet assembly of method 1000 may comprise forming a cylindrical magnet keeper having a semi-closed end and an open end. The magnet keeper may have an axial section (i.e., a plane that includes an axis of the magnet keeper's cylindrical shape) similar to a bowl or cup. A magnet may have a cylindrical body affixed to the semi-closed end. An axis of the magnet may be coaxial with the axis of the magnet keeper. The magnet may be affixed to an internal portion of the closed end of the magnet keeper and therefore may be internal to the magnet keeper.

The step 1020 of forming the coil assembly by providing the insert and the bobbin may be, for example, forming the coil assemblies 570sc, 770sc by providing the coil bobbin 572sc, 772sc and the insert 574sc, 774sc described above, although any suitable coil bobbin and insert may be employed. Step 1020 may also include other additional steps such as providing a coil, wrapping the coil about the bobbin, emulsifying the coil with an insulator, baking the coil and insulator assembly, and/or the like. The insert may be selected to symmetrically balance the coil assembly and the magnet assembly, although any suitable insert may be employed.

In addition, selecting the adhesive to minimize the elastic deformation of the adhesive over the predetermined operating temperature of the coil assembly of step 1020 may comprise selecting the adhesive to elastically deform over the predetermined operating temperature range of the coil assembly and plastically deform over an alternative predetermined operating temperature range that is greater than the predetermined operating temperature range of the coil assembly. The following Table 1 illustrates a selection matrix of adhesives.

**Table. 1. Exemplary selection matrix of adhesives**

| **Application** | **Temperature Range** | **Adhesive primary candidate** | **Adhesive secondary candidate** |
|---|---|---|---|
| Cryogenic | < -200 °C | Grey RTV | Clear RTV may not be sufficiently reliable due to potential for CTE shrinking at low temperatures |
| Standard | -200 °C - 200 °C | Clear RTV | |
| High Temperature | > 200 °C | | Grey RTV may not be sufficiently reliable due to potential for degrading at high temperatures |

The method 1000 may also verify that one or more sensor parameters remain within a predetermined sensor parameter range over the predetermined operating temperature range. For example, the one or more sensor parameters comprise at least one of a physical property of the sensor and a transduction property of the sensor. An example of a physical property of the sensor may be a damping of the sensor. The damping of the sensor may be defined as the adhesive dissipation of energy associated with a displacement of the bobbin relative to the insert. Such dissipation may occur when the sensor is oscillating. That is, the relative displacement of the bobbin relative to the insert may be due to compliance in the adhesive. Generally, the greater the relative displacement of the bobbin and the insert, the greater the effect of the damping on measurements by the sensor.

To address this issue, the step of selecting the adhesive to minimize elastic deformation of the adhesive over the predetermined operating temperature range of the coil assembly may also include selecting a quantity of the adhesive to minimize a gap between the bobbin and the insert. That is, the amount required to fill a gap of a predetermined width may be chosen. Other fluid properties of the adhesive may also be selected, such as a viscosity, adhesion, and/or the like to minimize the gap of the adhesive.

The elastic deformation of the adhesive over the predetermined temperature range may also be affected by other issues, such as whether the adhesive deforms at a same rate relative to change in temperature as the bobbin and/or the insert. Accordingly, selecting the adhesive to minimize elastic deformation of the adhesive over the predetermined operating temperature range of the coil assembly may include minimizing a difference between a coefficient of thermal expansion of the insert and a coefficient of thermal expansion of the adhesive.

The step 1030 of affixing, with the adhesive, the insert to the bobbin may comprise applying the adhesive to at least one of the insert and the bobbin and pressing the insert and the bobbin together in a predetermined spaced relationship. The adhesive comprises one of an epoxy resin and a silicon-based adhesive, although any suitable adhesive may be employed.

The foregoing describes various pick-off sensors as exemplary electromagnetic transducers for symmetric oscillations of a symmetrically oscillatory device. That is, the electromagnetic transducers transduce symmetric mechanical oscillations into electrical oscillations that are provided as a signal. Alternatively, an exemplary electromagnetic transducer for symmetric oscillations may be, for example, a driver, such as the driver 180 described above with reference to FIG. 2. That is, an electromechanical transducer for symmetric oscillations may be for transducing electrical oscillations into symmetric mechanical oscillations.

The electromagnetic transducer 17, and the methods 900, 1000 described above can be used to ensure that the symmetrically oscillatory device 1 has symmetric mechanical oscillations. By having symmetric oscillations, a measurement that relies on symmetric oscillations can be more accurate. For example, the electromagnetic transducer 17 may not cause out-of-balance-induced phase and amplitude variations in a signal provided by the electromagnetic transducer 17. Similarly, a signal provided to the electromagnetic transducer 17 can result in symmetric oscillations in the symmetrically oscillatory device 1. Symmetric oscillations can ensure that, for example, pickoff sensors using the electromagnetic transducer 17 will transduce symmetric oscillations of the symmetrically oscillatory device 1.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other electromagnetic transducers for symmetric oscillations of a symmetrically oscillatory device. Accordingly, the scope of the embodiments described above should be determined from the following claims.

## Claims

1. A method of forming an electromagnetic transducer for symmetric oscillations of a symmetrically oscillatory device, the method comprising:
forming a magnet assembly;
forming a coil assembly comprising:
providing an insert;
providing a bobbin;
selecting an adhesive to minimize an elastic deformation of the adhesive over a predetermined operating temperature range of the coil assembly; and
affixing, with the adhesive, the insert to the bobbin.

2. The method of claim 1, further comprising forming a non-interfering interface between the magnet assembly and the coil assembly.

3. The method of one of claim 1 or claim 2, wherein selecting the adhesive to minimize the elastic deformation of the adhesive over the predetermined operating temperature of the coil assembly comprises selecting the adhesive to elastically deform over the predetermined operating temperature range of the coil assembly and plastically deform over an alternative predetermined operating temperature range that is greater than the predetermined operating temperature range of the coil assembly.

4. The method of one of any of the foregoing claims 1 through 3, further comprising verifying that one or more sensor parameters remain within a predetermined sensor parameter range over the predetermined operating temperature range.

5. The method of claim 4, wherein the one or more sensor parameters comprise at least one of a physical property of the sensor and a transduction property of the sensor.

6. The method of one of any of the foregoing claims 1 through 5, wherein selecting the adhesive to minimize elastic deformation of the adhesive over the predetermined operating temperature range of the coil assembly comprises selecting a quantity of the adhesive to minimize a gap between the bobbin and the insert.

7. The method of one of any of the foregoing claims 1 through 6, wherein selecting the adhesive to minimize elastic deformation of the adhesive over the predetermined operating temperature range of the coil assembly comprises minimizing a difference between a coefficient of thermal expansion of the insert and a coefficient of thermal expansion of the adhesive.

8. The method of one of any of the foregoing claims 1 through 7, wherein affixing, with the adhesive, the insert to the bobbin comprises applying the adhesive to at least one of the insert and the bobbin and pressing the insert and the bobbin together in a predetermined spaced relationship.

9. The method of one of any of the foregoing claims 1 through 8, wherein adhesive comprises one of an epoxy resin and a silicon-based adhesive.

10. An electromagnetic transducer (570s, 770s) for transducing symmetric oscillations, the electromagnetic transducer (570s, 770s) being formed according to one of the foregoing claims 1 through 9.

11. A symmetrically oscillatory device (1) configured for symmetric oscillations, the symmetrically oscillatory device (1) comprising:
a first oscillatory portion (13) and a second oscillatory portion (13') configured to symmetrically oscillate relative to each other; and
an electromagnetic transducer (17) according to claim 10, the electromagnetic transducer (17) being mechanically coupled to the first oscillatory portion (13) and the second oscillatory portion (13').
